# EUROPEAN PATENT SPECIFICATION

(11) **EP 0 473 573 B1**
(45) Date of publication and mention of the grant of the patent: **11.09.1996**
(21) Application number: 89904366.5
(22) Date of filing: 28.02.1989
(51) Int. Cl.: B32B 3/26

(54) **IMPROVED OPAQUE FILM COMPOSITIONS**
UNDURCHSICHTIGE FILMZUSAMMENSETZUNG
COMPOSITIONS DE FILM OPAQUE AMELIORE

(30) Priority: 01.03.1988 GB 8804824
(43) Date of publication of application: 11.03.1992
(73) Proprietor: MOBIL PLASTICS EUROPE, INC., B-6761 Virton (BE)
(72) Inventor: FROGNET, Jean-Pierre, B-6760 Virton (BE); KELLER, Lajos Edward, L-1952 Luxembourg (LU)
(74) Representative: Colmer, Stephen Gary
(86) International application number: US8900750
(87) International publication number: WO8908023

(56) References cited:
- EP-A- 0 258 020
- US-A- 4 560 614
- US-A- 4 582 753
- US-A- 4 626 460
- US-A- 4 632 869
- US-A- 4 681 803
- KIRK-OTHMER 'Encyclopedia of Chemical Technology,' 1982 , JOHN WILEY & SONS , NEW YORK 3rd Edition, vol. 17

## Description

This invention relates to polymeric film structures of improved opacity; more particularly, this invention relates to pigmented films, and to their manufacture.

EP-A-0258020, which constitutes prior art within the meaning of Article 54(3) EPC, describes and claims a film structure which comprises:
(a) a voided core layer comprising a matrix of (i) a thermoplastic polymeric material in which are dispersed (ii) void-initiating solid particles which are phase-distinct from the thermoplastic polymeric material of the matrix and about which particles are located opacifying voids and a minor amount (iii) of a light absorbing pigment; and
(b) at least one transparent skin layer adhering to the surface of the voided core layer comprising a thermoplastic polymeric material being thick enough substantially to prevent the asperities of the core layer from being manifest, the light transmission of the structure being less than about 15%.

U.S. 4632869 discloses a resin combination comprising a thermoplastic polymer matrix having dispersed therein as distinct phases, a multiplicity of small spherical solid particles of polybutylene terephthalate.

This invention seeks to provide films of enhanced opacity for a comparable pigment loading or of comparable opacity for a reduced pigment loading.

According, therefore, to one aspect of this invention there is provided an opaque, biaxially-oriented, polymeric film which comprises a matrix of (i) a thermoplastic polymeric material in which are dispersed (ii) void-initiating solid particles which are phase-distinct from the thermoplastic polymeric material of the matrix and about which particles are located opacifying voids and a minor amount of (iii) a light-absorbing pigment which comprises pigment particles of a lamellar morphology.

According to a further aspect of this invention, there is also provided a process for the preparation of a film as herein defined, which process comprises:
mixing, preferably by melting together, a major proportion of (i) with a minor proportion of (ii);
heating the mixture to a temperature above the melting point of (i);
uniformly dispersing (ii) throughout (i), preferably as microspheres;
uniformly dispersing a minor amount, suitably from 0.2 to 12 wt. %, preferably from 0.5 to 5 wt. %, of (iii) therein;
forming a film thereof;
and biaxially orienting the film at a temperature and deformation ratio effective to form opacifying voids therein. The biaxial orientation is carried out in a conventional manner; for example, as disclosed in our U.S. 4,377,616.

The pigment particles of lamellar morphology (lamellar pigment) may comprise an organic pigment, preferably graphite, or an inorganic pigment, such as a silicate, suitably a silicate which has a pronounced tendency to cleave in one preferred planar direction, for example, a mica. Graphite is a particularly preferred lamellar pigment. The lamellar pigment should have an average particle size which, of itself, would be insufficient to cause voiding of the matrix; this will depend on the nature of the matrix and the processing conditions, especially deformation temperature, and the amount of the pigment in the matrix. The term "voiding of the matrix" as used herein designates creating a space within the matrix. However, good results are obtained when the lamellar pigment has an average particle size from 0.2 to 2.0 micrometers, preferably from 0.5 to 1.0 micrometers. The lamellar pigment may be present in an amount from 0.2 to 12 wt. %, suitably from 0.5 to 5.0 wt. % of the film, preferably from 1.0 to 2.0 wt. % of the film. The film may also contain a non-lamellar pigment which may comprise a light-reflecting pigment; for example titania. Such pigments may be selected from those conventionally used in the dyeing and/or coloring of synthetic resins, industrial coatings and paints, and may be organic or inorganic. Suitable colours and materials are readily available: a list of various pigments is disclosed in Vol. 17, pages 788-889, of Kirk-Othmer "Encyclopedia of Chemical Technology", 3rd Edition C. 1982. Some exemplary pigments are carbon black, brown iron oxide, and iron blue.

Thermoplastic polymeric materials (i) which have been found to be useful in preparing the matrices of the film of this invention include polyolefins. A preferred class of such polyolefins is the semicrystalline polyolefin to which a high degree of biaxial orientation can be incorporated by effective drawing (as distinct from drafting) in both the machine and transverse directions. Examples include homopolyolefins such as polyethylene, especially linear polyethylene, and polypropylene with polypropylene being preferred.

The void-initiating particles (ii) may comprise an organic or an inorganic material and preferably have a higher melting point and/or higher glass transition temperature than (i). Preferably, the material comprises a polymeric material, suitably one which is comeltable with the thermoplastic polymeric material of the matrix. It is also contemplated that the void-initiating particles can be preformed and then uniformly dispersed into a melt of the polymeric material of the matrix; for example, of polypropylene. This has the advantage of not having to subject the polymeric material of the matrix to the melt temperature of a much higher melting polymer, thereby minimizing its thermal degradation. For convenience and more precise formulation control, master batching may be employed. Examples of polymeric materials which can be the dispersed phase within the thermoplastic polymeric material, preferably polypropylene, of the matrix include polyesters, especially poly(carboxylic esters) such as polybutylene terephthalate and polyethylene terephthalate; polycarbonates; polysulphones; polyacetates; polymers of acrylic esters; and nylon. Inorganic materials include solid or hollow, preformed glass, metal or ceramic spheres. In fact, any material which can be formed into spheres or other suitable shapes without causing thermal degradation to the core material is contemplated.

The void-initiating solid particles may be of any shape although it is preferred that they are substantially spherical. Preferably the void-initiating solid particles have an average particle size from 0.5 to 10 micrometers, preferably from 0.75 to 4 micrometers. Where such particles are spherical it has been found that they can produce, on biaxial deformation of the film, a statistical distribution of voids of generally biconvex lens shape with the two major average dimensions being greater than 30 micrometers. The void-initiating particles may be present in an amount up to 20 wt. % of the film, preferably from 2 to 10 wt. % of the film.

The invention also provides a film structure which comprises (a), as core layer, a film as herein defined and (b) at least one transparent skin layer adhering to the surface of the voided core layer comprising a thermoplastic polymeric material and being thick enough substantially to prevent the asperities of the core layer from being manifest, the light transmission of the structure being less than about 15%. Preferably, the film strvcture comprises three or more layers. In order to achieve the film structure of the present invention, it is important that a particular relationship exist between the thickness of the core and the thickness of the skin layer or layers. It is preferred that the core thickness be from about 30, preferably from 40, to about 95% of the thickness of the structure.

In such a film structure the lamellar pigment may be present in the core layer only. The or each skin layer may be transparent or may comprise a non-lamellar pigment. At least one skin layer may comprise the same polymeric material as the matrix of the voided core layer.

This invention further provides a process for the preparation of such a film structure which comprises, either simultaneously with or subsequently to the film-forming step, adhering to at least one surface of that film (a) a transparent skin layer (b). Suitably, the adhering step is effected by lamination or coextrusion. The biaxial orientation is preferably effected after the adhesion of (b) and (a), and is preferably effected in both directions concurrently, suitably at a temperature above 100°C.

The following Examples illustrate the invention.

### EXAMPLES 1-8

A conventional, biaxially oriented, three layer, cavitated coextruded polypropylene film structure of gauge between 30 and 35 micrometers we prepared except that the core layer contained filler as indicated in Table I below. A control containing no filler was also prepared.

**TABLE I**

| Example | Graphite (%) | | | Filler (Wt.%) | | Light Transmission (%) |
|---|---|---|---|---|---|---|
| | | | | Mica (%) | Fe₂O₃(%) | |
| | 0.5 µ | 0.8 µ | 1.9 µ | | | |
| Control | - | | - | - | - | 20.1 |
| 1 | - | 1.07 | - | - | - | 3.4 |
| 2 | - | 1.25 | - | - | - | 2.5 |
| 3 | - | 1.25 | 0.1 | - | - | 2.5 |
| 4 | - | 1.0 | 0.25 | - | - | 3.0 |
| 5 | - | 1.25 | - | 0.1 | - | 3.2 |
| 6 | - | 1.25 | - | - | 0.1 | 2.3 |
| 7 | - | | 2.00 | - | - | 1.2 |
| 8 | - | 1.0 | - | - | - | 3.1 |

It will be seen that the inclusion of little more than 1% of lamellar filler reduces the light transmission of the formed film by almost an order of magnitude. The coextruded film resembles aluminum foil except that it additionally exhibits a lustrous satin appearance. This is attained while maintaining yield; unit weight; density; gauge; and water vapour transmission rate (WVTR) at comparable, sometimes marginally improved values, and increasing the gloss; and these all with reference to a conventional white cavitated film.

Greater loadings of lamellar light-absorbing pigment may be incorporated, if desired, into the film as illustrated in Examples 9-20.

### EXAMPLES 9-20

Several coextruded polypropylene film structures were prepared in the same manner as in Examples 1-8, except that higher loadings of the lamellar filler were utilized, as specified in Table 2. The light transmission of such films was also measured and the results are summarized in Table 2.

**TABLE 2**

| Example | Filler(Wt%) | | | | | |
|---|---|---|---|---|---|---|
| | Graphite (%) | | | Mica (%) | Fe₂O₃(%) | Light Transmission (%) |
| | 0.5 µ | 0.8 µ | 1.9 µ | | | |
| 9 | 1.5 | - | - | - | - | 1.0 |
| 10 | 2.0 | - | - | - | - | 0.4 |
| 11 | - | 1.5 | - | - | - | |
| 12 | - | 2.0 | - | - | - | |
| 13 | - | 3.0 | - | - | - | |
| 14 | - | - | 1.0 | - | - | |
| 15 | - | 1.0 | 1.0 | - | - | |
| 16 | - | - | 2.0 | - | - | |
| 17 | - | 1.0 | - | - | 1.0 | |
| 18* | - | 2.0 | - | - | - | |
| 19* | - | 2.0 | - | - | - | |
| 20* | - | 2.0 | - | - | - | |

| | | | | | | |
|---|---|---|---|---|---|---|
| * These Examples have, respectively, 0.5%, 1.0% and 2.0% of pigment incorporated in a coextruded skin layer in order to achieve a chosen colour or shading. | | | | | | |

It is found, when graphite is used as laminar pigment, that essentially no passage of light, particularly of UV light, direct or indirect, occurs through such film. This greatly reduces incidence of rancidity of foodstuffs when packaged with such film.

## Claims

1. An opaque, biaxially oriented, polymeric film which comprises a matrix of (i) a thermoplastic polymeric material in which are dispersed (ii) void-initiating solid particles which are phase-distinct from the thermoplastic polymeric material of the matrix and about which particles are located opacifying voids and a minor amount of (iii) a light-absorbing pigment characterized in that the light absorbing pigment comprises pigment particles of a lamellar morphology.

2. A film according to claim 1 wherein the lamellar pigment comprises an organic pigment.

3. A film according to claim 1 or 2 wherein the pigment comprises graphite.

4. A film according to any preceding claim wherein the lamellar pigment comprises an inorganic pigment.

5. A film according to claim 4 wherein the inorganic pigment comprises silicate.

6. A film according to claim 4 or 5 wherein the silicate comprises a mica.

7. A film according to any preceding claim wherein the lamellar pigment (iii) has an average particle size which, of itself, would be insufficient to cause voiding of the matrix.

8. A film according to any preceding claim wherein the pigment has an average particle size of 0.2 to 2.0 micrometers.

9. A film according to any preceding claim wherein the lamellar pigment (iii) is present in an amount from 0.2 to 12 wt. % of the film.

10. A film according to claim 9 wherein the lamellar pigment (iii) is present in an amount from 0.5 to 5 wt. % of the film.

11. A film according to any preceding claim which also comprises a non-lamellar pigment.

12. A film according to any preceding claim wherein the thermoplastic polymeric material (i) of the matrix comprises a polyolefin.

13. A film according to claim 12 wherein the polyolefin comprises a semicrystalline polymeric material.

14. A film according to claim 12 wherein the polyolefin comprises polypropylene.

15. A film according to any preceding claim wherein the void-initiating solid particles (ii) comprise an organic or inorganic material.

16. A film according to claim 15 wherein the material comprises a polymeric material.

17. A film according to claim 16 wherein the organic polymeric material comprises a polyester.

18. A film according to claim 17 whrein the polyester comprises polybutylene terephthalate.

19. A film according to any preceding claim wherein the void-intiating solid particles (ii) are substantially spherical.

20. A film according to any preceding claim wherein the void-initiating solid particles (ii) have an average particle size from 0.5 to 10 micrometers.

21. A film structure which comprises (a), as core layer, a film according to any preceding claim and (b) at least one transparent skin layer adhering to the surface of the voided core layer comprising a thermoplastic polymeric material and being thick enough substantially to prevent the asperities of the core layer from being manifest, the light transmission of the structure being less than about 15%.

22. A film structure according to claim 21 comprising three or more layers.

23. A film structure according to claim 21 or 22 wherein the lamellar pigment (iii) is present in the core layer only.

24. A film structure according to any of claims 21 to 23 wherein a non-lamellar pigment is present in a skin layer.

25. A film structure according to any of claims 21 to 24 wherein at least one skin layer (b) immediately adjacent the voided core layer (a) comprises the same polymeric material as the matrix of the voided core layer (a).

26. A film structure according to any of claims 21 to 25 wherein the thickness of the voided core layer (a) comprises from 30 to 95% of the thickness of the structure.

27. A process for the preparation of a film according to any preceding claim, which process comprises:
mixing a major proportion of (i) with a minor proportion of (ii);
heating the mixture to a temperature above the melting point of (i);
uniformly dispersing (ii) throughout (i);
uniformly dispersing a minor amount of (iii) therein;
forming a film thereof;
and biaxially orienting the film at a temperature and deformation ratio effective to form opacifying voids therein.

28. A process according to claim 27 wherein (i) and (ii) are melted together.

29. A process for the preparation of a film structure according to any of claims 21 to 26 which comprises, either simultaneously with or subsequently to the film-forming step of claim 27, adhering to at least one surface of that film (a) a transparent skin layer (b).

30. A process according to claim 29 wherein the adhering step is effected by lamination or by coextrusion.

31. A process according to claim 29 or 30 wherein the biaxial orientation is effected after the adhesion of (b) and (a).

32. A process according to any of claims 27 to 31 wherein the orientation in both directions is effected concurrently.

33. A process according to any of claims 27 to 32 whrein the orientation is effected at a temperature above 100°C.

## Patentansprüche

1. Undurchsichtiger, biaxial orientierter Polymerfilm, der eine Matrix aus (i) einem thermoplastischen Polymermaterial aufweist, in der (ii) Leerstellen iniziierende Feststoffteilchen dispergiert sind, die sich als Phase von dem thermoplastischen Polymermaterial der Matrix unterscheiden, wobei um die genannten Teilchen herum eine Undurchsichtigkeit hervorrufende Leerstellen angeordnet sind, und eine kleinere Menge von (iii) eines lichtabsorbierenden Pigments dispergiert ist, dadurch gekennzeichnet, daß das lichtabsorbierende Pigment Teilchen mit einer lamellaren Morphologie enthält.

2. Film nach Anspruch 1, worin das lamellare Pigment ein organisches Pigment enthält.

3. Film nach Anspruch 1 oder 2, worin das Pigment Graphit enthält.

4. Film nach einem der vorstehenden Ansprüche, worin das lamellare Pigment ein anorganisches Pigment enthält.

5. Film nach Anspruch 4, worin das anorganische Pigment ein Silikat enthält.

6. Film nach Anspruch 4 oder 5, worin das Silikat einen Glimmer enthält.

7. Film nach einem der vorstehenden Ansprüche, worin das lamellare Pigment (iii) eine durchschnittliche Teilchengröße aufweist, die für sich betrachtet unzureichend wäre, um Leerstellen in der Matrix zu verursachen.

8. Film nach einem der vorstehenden Ansprüche, worin das Pigment eine durchschnittliche Teilchengröße von 0,2 bis 2,0 Mikrometer aufweist.

9. Film nach einem der vorstehenden Ansprüche, worin das lamellare Pigment (iii) in einer Menge von 0,2 bis 12 Gew.-% des Films vorliegt.

10. Film nach Anspruch 9, worin das lamellare Pigment (iii) in einer Menge von 0,5 bis 5 Gew.-% des Films vorliegt.

11. Film nach einem der vorstehenden Ansprüche, der auch ein nicht-lamellares Pigment enthält.

12. Film nach einem der vorstehenden Ansprüche, worin das thermoplastische Polymermaterial (i) der Matrix ein Polyolefin enthält.

13. Film nach Anspruch 12, worin das Polyolefin ein halbkristallines Polymermaterial enthält.

14. Film nach Anspruch 12, worin das Polyolefin Polypropylen enthält.

15. Film nach einem der vorstehenden Ansprüche, worin die Leerstellen iniziierenden festen Zeichen (ii) ein organisches oder anorganisches Material enthalten.

16. Film nach Anspruch 15, worin das Material ein Polymermaterial enthält.

17. Film nach Anspruch 16, worin das organische Polymermaterial einen Polyester enthält.

18. Film nach Anspruch 17, worin der Polyester Polybutylenterephthalat enthält.

19. Film nach einem der vorstehenden Ansprüche, worin die Leerstellen initiierenden festen Teilchen (ii) im wesentlichen kugelförmig sind.

20. Film nach einem der vorstehenden Ansprüche, worin die Leerstellen initiierenden festen Teilchen eine durchschnittliche Teilchengröße von 0,5 bis 10 Mikrometer aufweisen.

21. Filmstruktur, die (a) als Kernschicht einen Film nach einem der vorstehenden Ansprüche und (b) mindestens eine durchsichtige Hautschicht enthält, die an der Oberfläche der mit Leerstellen versehenen Kernschicht, die ein thermoplastisches Polymermaterial enthält, haftet und dick genug ist, um im wesentlichen zu verhindern, daß die Rauhigkeiten der Kernschicht sichtbar sind, wobei die Lichtdurchlässigkeit der Struktur weniger als etwa 15% beträgt.

22. Filmstruktur nach Anspruch 21, die drei oder mehr Schichten aufweist.

23. Filmstruktur nach Anspruch 21 oder 22, worin das lamellare Pigment (iii) nur in der Kernschicht vorliegt.

24. Filmstruktur nach einem der Ansprüche 21 bis 23, worin ein nicht-lamellares Pigment in einer Hautschicht vorliegt.

25. Filmstruktur nach einem der Ansprüche 21 bis 24, worin mindestens eine Hautschicht (b) unmittelbar neben der mit Leerstellen versehenen Kernschicht (a) das gleiche Polymermaterial wie die Matrix der mit Leerstellen versehenen Kernschicht (a) enthält.

26. Filmstruktur nach einem der Ansprüche 21 bis 25, worin die Dicke der mit Leerstellen versehenen Kernschicht (a) 30 bis 95% der Dicke der Struktur ausmacht.

27. Verfahren zum Herstellen eines Films nach einem der vorstehenden Ansprüche, das folgendes umfaßt:
Mischen eines größeren Anteils von (i) mit einem kleineren Anteil von (ii);
Erhitzen des Gemisches auf eine Temperatur über dem Schmelzpunkt von (i);
gleichmäßiges Dispergieren von (ii) in (i);
gleichmäßiges Eindispergieren einer kleineren Menge von (iii);
Formen eines Films hiervon;
und biaxiales Orientieren des Films bei einer Temperatur und einem Deformationsverhältnis, die zur Bildung von undurchsichtigen Leerstellen im Film wirksam sind.

28. Verfahren nach Anspruch 27, worin (i) und (ii) zusammengeschmolzen werden.

29. Verfahren zur Herstellung einer Filmstruktur nach einem der Ansprüche 21 bis 26, das entweder gleichzeitig mit der Filmbildungsstufe gemäß Anspruch 27 oder nachfolgend hierzu das Anhaften einer durchsichtigen Hautschicht (b) an mindestens eine Oberfläche jenes Films (a) umfaßt.

30. Verfahren nach Anspruch 29, worin die Stufe des Anhaftens durch Laminieren oder Koextrudieren ausgeführt wird.

31. Verfahren nach Anspruch 29 oder 30, worin das biaxiale Orientieren nach dem Anhaften von (b) und (a) erfolgt.

32. Verfahren nach einem der Ansprüche 27 bis 31, worin die Orientierung in beiden Richtungen gleichzeitig erfolgt.

33. Verfahren nach einem der Ansprüche 27 bis 32, worin das Orientieren bei einer Temperatur oberhalb 100°C durchgeführt wird.

## Revendications

1. Un film de polymère, a orientation biaxiale, opaque, qui comprend une matrice de:
(i) une matière polymère thermoplastique dans laquelle sont dispersées;
(ii) des particules solides générant des vides, qui constituent une phase distincte de la matière polymère thermoplastique de la matrice et autour desquelles particules sont formées des vides opacifiants; et
(iii) une quantité minime d'un pigment absorbant la lumière caractérisé en ce que le pigment absorbant la lumière comprend des particules de pigment présentant une morphologie lamellaire.

2. Un film selon la revendication 1, dans lequel le pigment lamellaire comprend un pigment organique.

3. Un film selon la revendication 1 ou 2, dans lequel le pigment comprend du graphite.

4. Un film selon l'une quelconque des revendications précédentes, dans lequel le pigment lamellaire comprend un pigment inorganique.

5. Un film selon la revendication 4, dans lequel le pigment inorganique comprend un silicate.

6. Un film selon la revendication 4 ou 5, dans lequel le silicate comprend un mica.

7. Un film selon l'une quelconque des revendications précédentes dans lequel le pigment lamellaire (iii) a une dimension particulaire moyenne qui, par elle-même est insuffisante pour produire des vides dans la matrice.

8. Un film selon l'une quelconque des revendications précédentes, dans lequel le pigment présente une dimension particulaire de 0,2 a 2,0 micromètres.

9. Un film selon une quelconque des revendications précédentes, dans lequel le pigment lamellaire (iii) est présent a raison de 0,2 a 12% en poids du film.

10. Un film selon la revendication 9, dans lequel le pigment lamellaire (iii) est présent a raison de 0,5 a 5% en poids du film.

11. Un film selon l'une quelconque des revendications précédentes qui comprend en outre un pigment non-lamellaire.

12. Un film selon l'une quelconque des revendications précédentes, dans lequel la matière polymère thermoplastique (i) de la matrice comprend une polyoléfine.

13. Un film selon la revendication 12 dans lequel la polyoléfine comprend une matière polymère semi-cristalline.

14. Un film selon la revendication 12, dans lequel la polyoléfine comprend du polypropylène.

15. Un film selon l'une quelconque des revendications précédentes dans lequel les particules de solides générant des lacunes (ii) comprend une substance organique ou inorganique.

16. Un film selon la revendication 15, dans lequel la substance comprend une matière polymère.

17. Un film selon la revendication 16, dans lequel la matière polymère organique comprend un polyester.

18. Un film selon la revendication 17, dans lequel le polyester comprend du polybutylène téréphtalate.

19. Un film selon l'une quelconque des revendications précédentes selon lequel les particules solides générant les vides (ii) sont pratiquement sphériques.

20. Un film selon l'une quelconque des revendications précédentes, dans lequel les particules solides générant les vides (ii) ont une dimension particulaire comprise entre 0,5 et 10 micromètres.

21. Une structure de film qui comprend (a) en tant que couche interne, un film selon l'une quelconque des revendications précédentes, et (b) au moins une couche superficielle transparente adhérant à la surface de la couche intérieure lacunaire comprenant une matière polymère thermoplastique et suffisamment épaisse pour pratiquement éviter que les aspérités de la couche interne ne soient apparentes, la transmission de la lumière de la structure étant inférieure à environ 15%.

22. Une structure de film selon la revendication 21 comprenant trois couches ou davantage.

23. Une structure de film selon les revendications 21 ou 22, dans laquelle le pigment lamellaire (iii) est présent dans la couche interne seulement.

24. Une structure de film selon l'une quelconque des revendications 21 à 23, dans laquelle un pigment non-lamellaire est présent dans une couche superficielle.

25. Une structure de film selon l'une quelconque des revendications 21 à 24, dans laquelle au moins une des couches superficielles (b) immédiatement adjacente à la couche interne (a) comprend la même matière polymère que la matrice de la couche interne lacunaire (a).

26. Une structure de film selon l'une quelconque des revendications 21 à 25, dans laquelle l'épaisseur de la couche interne lacunaire (a) forme de 30 à 95% de l'épaisseur de la structure.

27. Un procédé de préparation d'un film selon l'une quelconque des revendications précédentes, ce procédé comprenant:
- le mélange d'une proportion principale de (i) avec une proportion mineure de (ii),
- le chauffage du mélange à une température supérieure au point de fusion de (i);
- la dispersion uniforme de (ii) dans (i);
- la dispersion uniforme d'une petite quantité de (iii) dans le mélange;
- la formation d'un film à partir du mélange; et
- l'orientation biaxiale du film à une température et avec un taux de déformation suffisants pour former en son sein des vides opacifiants.

28. Un procédé selon la revendication 27, dans laquelle (i) et (ii) sont fondus simultanément.

29. Un procédé de préparation d'une structure de film selon l'une quelconque des revendications 21 à 26, qui comprend, soit en même temps, soit après l'opération de formation du filin de la revendication 27, sur au moins l'une des faces dudit film (a) d'une couche superficielle transparente (b).

30. Un procédé selon la revendication 29 dans laquelle l'étape d'adhérence est effectuée par stratification ou par co-extrusion.

31. Un procédé selon la revendication 29 ou 30, dans laquelle l'orientation biaxiale est effectuée après l'adhérence de (b) et de (a).

32. Un procédé selon l'une quelconque des revendications 27 à 31, dans lequel l'orientation des deux directions est effectuée simultanément.

33. Un procédé selon l'une quelconque des revendications 27 à 32, dans lequel l'orientation est effectuée à une température supérieure à 100°C.
